# EUROPÄISCHE PATENTSCHRIFT

(11) **EP 2 303 661 B1**
(45) Veröffentlichungstag und Bekanntmachung des Hinweises auf die Patenterteilung: **30.03.2016**
(21) Anmeldenummer: 09765563.3
(22) Anmeldetag: 10.06.2009
(51) Int. Cl.: B60T 17/22, B61H 7/08

(54) **VERFAHREN ZUR WIRKÜBERWACHUNG VON SCHIENENBREMSEN**
METHOD FÜR MONITORING THE FUNCTION OF TRACK BRAKES
PROCÉDÉ POUR SURVEILLER LE FONCTIONNEMENT D'UN FREIN SUR RAIL

(30) Priorität: 20.06.2008 DE 102008029312
(43) Veröffentlichungstag der Anmeldung: 06.04.2011
(73) Patentinhaber: KNORR-BREMSE Systeme für Schienenfahrzeuge GmbH, 80809 München (DE)
(72) Erfinder: LEHMANN, Henry, A-2371 Hinterbrühl (AT); DATZREITER, Josef, A-2542 Kottingbrunn (AT); DAXECKER, Franz, A-1150 Wien (AT); SCHLAGER, Peter, A-3204 Kirchberg (AT)
(74) Vertreter: Schönmann, Kurt
(86) Internationale Anmeldenummer: PCT/EP2009/004162
(87) Internationale Veröffentlichungsnummer: WO 2009/152983

(56) Entgegenhaltungen:
- EP-A2- 1 177 962
- DE-A1- 10 155 143
- DE-B- 1 183 117

## Beschreibung

Die Erfindung bezieht sich auf ein Verfahren zur Wirküberwachung von Schienenbremsen für Schienenfahrzeuge gemäß dem Oberbegriff des Patentanspruches 1.

Eine solches Verfahren ist aus der DE 101 55 143 A1 bekannt.

Moderne Schienenfahrzeuge sind üblicherweise zusätzlich zu einer pneumatischen Bremsanlage mit einer magnetischen Schienenbremse ausgestattet, die als Wirbelstrombremse oder Magnetschienenbremse ausgebildet ist.

Bei Vollbahnen ist eine "Hochaufhängung" üblich, bei der ein Bremsmagnet durch Federn in einer vorbestimmten Höhe von rund 100mm über den Schienen gehalten wird. Für den Bremsvorgang werden die Federkräfte durch pneumatische Betätigungszylinder überwunden und die Bremsmagnete aus der Hochlage in die Arbeitsstellung auf die Schiene abgesenkt. Gleichzeitig wird die Bremse elektrisch eingeschaltet (vgl. Wolfgang Hendrichs, "Das statische, dynamische und thermische Verhalten von Magnetschienenbremsen", Elektrische Bahnen eb, 86. Jahrgang, Heft 7/1988, S. 224-228).

Bei Triebfahrzeugen kann auch eine Kombination von Hoch- und Tiefaufhängung vorgesehen sein. Die Magnete sind dann an Druckzylindern oder Luftbälgen aufgehängt, die mittels Druckluft in die Hochlage gegen einen drehgestellfesten Zentrieranschlag gedrückt werden. Bei einer Bremsbetätigung erfolgt eine Entlüftung der Druckzylinder bzw. Luftbälge, wobei die Magnete in Bereitschaftsstellung abgesenkt werden. Bei Nahverkehrsfahrzeugen, wie z.B. Straßenbahnen, ist die Tiefaufhängung üblich. Generell ist bei der Magnetschienenbremse in der Bremsstellung der Bremsmagnet in Reibkontakt mit der Schiene.

Bei einer sogenannten linearen Wirbelstrombremse wird der Bremsmagnet dagegen auch in der Bremsstellung in einem Abstand zur Schiene gehalten, wobei elektrische Magnetspulen Polkeme magnetisieren, so daß bei eingeschalteter Wirbelstrombremse bei einer Relativbewegung der Wirbelstrombremse gegenüber der Schiene aufgrund der zeitlichen Änderungen des magnetischen Flusses Wirbelströme in der Fahrschiene induziert werden, die ein sekundäres Magnetfeld erzeugen, das dem Magnetfeld der Wirbelstrombremse entgegengerichtet ist. Hieraus ergibt sich eine der Fahrtrichtung entgegengesetzt wirkende horizontale Bremskraft. Notwendig hierfür ist aber eine magnetische Kopplung zwischen Schiene und Bremsmagnet, die wesentlich vom Luftspalt zwischen Bremsmagnet und Schiene abhängt

Bei beiden Arten von Magnetbremsen ist somit die Wirksamkeit der Bremse von dem jeweils richtigen Abstand zwischen Bremsmagnet und Schiene wesentlich.

Die DE 101 55 143 schlägt daher eine Diagnose- und Überwachungseinrichtung zur Überwachung des Abstandes zwischen der Magnetbremse und der Fahrschiene vor, die mehrere Abstandssensoren verwendet, die den Luftspalt zwischen Magnetbremse und Schienenoberseite messen. Hierdurch kann bei beiden Arten von Magnetbremsen laufend überprüft werden, ob der Bremsmagnet sowohl in der Fahrtstellung als auch in der Bremsstellung jeweils den richtigen Abstand zur Schiene hat.

Allerdings bedingen die Sensoren einen zusätzlichen Aufwand und es besteht die Gefahr, daß bei Ausfall oder Fehlfunktion der Sensoren Fehler nicht erkannt werden oder unzutreffende Fehlersignale erzeugt werden.

Auch die DE 100 09 331 C2 schlägt die Verwendung von Sensoren vor, die den Abstand der magnetischen Bremse von der Schienenoberkante messen und in Abhängigkeit von dem Meßsignat eine Steuer-/Regeleinrichtung ansteuern, die mit Hilfe von Aktuatoren den Abstand zwischen magnetischer Bremse und Schienenoberkante einstellt.

Aufgabe der Erfindung ist es, das Verfahren zur Wirküberwachung von Schienenbremsen der eingangs genannten Art dahingehend zu verbessern, daß ohne Verwendung von Abstandssensoren eine einwandfreie Funktion der Schienenbremse überprüft werden kann.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Erfindung basiert auf dem Grundgedanken, daß durch Änderungen des Magnetkreises bewirkte Stromänderungen einen eindeutigen Rückschluß auf den eingenommenen Zustand des Systems Schienenbremse/Schienen zulassen.

Die magnetische Kopplung zwischen dem Bremsmagneten und der Schiene bildet einen Magnetkreis und ist bei der Magnetschienenbremse abhängig von dem Abstand zwischen Bremsmagnet und Schiene. Die magnetische Kopplung hat daher unmittelbare Rückwirkung auf den Erregerstrom, der durch die Wicklung des Bremsmagneten fließt. Ist während des Absenkens der Magnetschienenbremse der Erregerstrom eingeschaltet, so erhält man eine signifikante Änderung des Erregerstromes, so bald die magnetische Kopplung stattfindet.

Die Erfindung schlägt daher vor, den elektrischen Strom durch die Wicklung des Bremsmagneten zu messen und den zeitlichen Verlauf des gemessenen Stromes mit einem gespeicherten zeitlichen Verlauf eines Referenzstromes zu vergleichen. Hieraus erhält man ein Signal, das anzeigt, ob eine magnetische Kopplung zwischen dem Bremsmagneten und der Schiene statt gefunden hat, was gleichbedeutend mit der Wirksamkeit oder Verfügbarkeit der Schienenbremse ist.

In analoger Weise gilt dies auch für magnetische Wirbelstrombremsen, bei denen der zeitliche Verlauf des Erregerstromes von der magnetischen Kopplung zwischen Bremsmagneten und Schiene abhängt.

Durch Vergleich des zu erwartenden Stromverlaufes (Referenzstrom) mit einem gemessenen Stromverlauf wird der Wechsel der magnetischen Kopplung zwischen dem Bremsmagneten und der Schiene erkannt.

Es werden daher weder zusätzliche Sensoren benötigt, noch ist die bisher angewandte Sichtkontrolle erforderlich. Die Messung des Erregerstromes benötigt keine zusätzlichen Sensoren, sondern lediglich einen Meßwiederstand in einem Steuergerät. Die Auswertung des zeitlichen Verlaufes des Erregerstromes und der Vergleich mit einem zu erwartenden Stromverlauf kann von einem Mikroprozessor in einem Bremssteuergerät vorgenommen werden. Damit kann die Verfügbarkeit der Schienenbremse, bzw. deren bremstechnische Wirksamkeit festgestellt werden.

Im folgenden wird die Erfindung anhand von Ausführungsbeispielen im Zusammenhang mit der Zeichnung ausführlicher erläutert. Es zeigt:
- Figur 1: ein Prinzipschaltbild eines Steuergerätes zur Ansteuerung einer magnetischen Schienenbremse; und
- Figur 2: ein Meßdiagramm des zeitlichen Verlaufes des Erregerstromes, für die Fälle einer wirksamen und einer unwirksamen magnetischen Kopplung zwischen Bremsmagnet und Schiene.
- Figur 3: ein Diagramm des zeitlichen Verlaufes des Erregerstromes bei getaktetem Einschalten des Erregerstromes; und
- Figur 4: ein Meßdiagramm des zeitlichen Verlaufes des Erregerstromes mit und ohne Änderung der magnetischen Kopplung zwischen Bremsmagnet und Schiene.

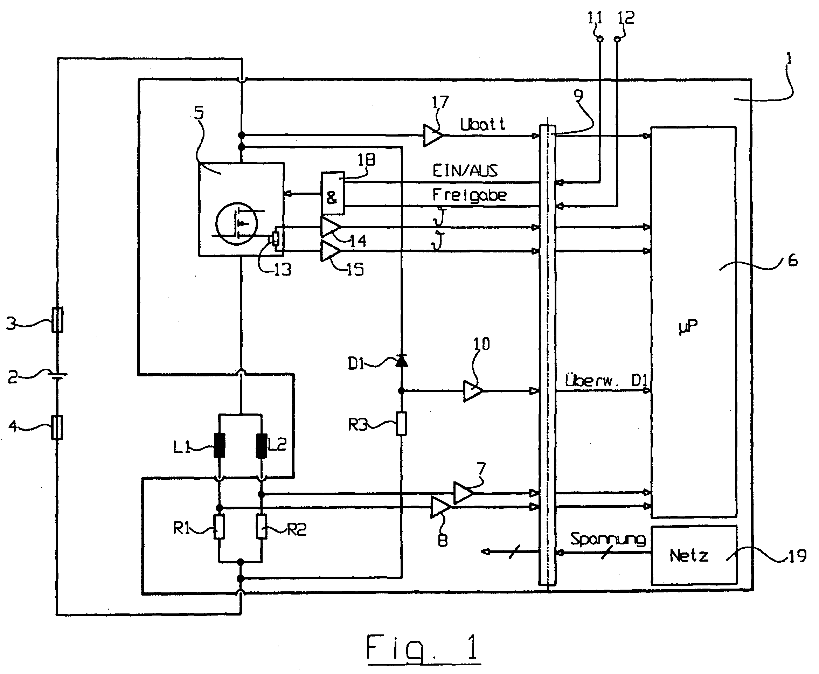

Figur 1 zeigt ein Steuergerät 1 für die Ansteuerung von Bremsmagneten, die im Schaltbild der Figur 1 als induktivitäten L1 und L2 dargestellt sind.

Das Steuergerät 1 wird aus einem Bordnetz, wie z.B. einer Batterie 2, mit elektrischer Energie versorgt, das zu beiden Polen der Batterie durch eine Sicherung 3 bzw. 4 abgesichert ist.

Die beiden Induktivitäten L1 und L2 liegen in einem Stromkreis mit einem Leistungsschalter 5, der von einem Mikroprozessor 6 angesteuert wird und die Induktivitäten L1 und L2 mit Batteriespannung der Batterie 2 verbindet. Beide Induktivitäten L1 und L2 liegen jeweils in Reihenschaltung mit Shuntwiderständen R1 bzw. R2, deren Spannungsabfall dem durch die Induktivitäten L1 bzw. L2 fließenden Strom proportional ist. Diese Spannung wird am gemeinsamen Verbindungspunkt zwischen den Induktivitäten L1 und L2 und den Shuntwiderständen R1 und R2 abgegriffen und über Meßverstärker 7 bzw. 8 an den Mikroprozessor 6 übertragen. Der Mikroprozessor 6 ist durch eine galvanische Trennung 9 vom Leistungsteil der Schaltung getrennt.

Der Leistungsschalter 5 hat einen Temperatursensor 13, der die Temperatur des Leistungsschalters 5 mißt und über Meßverstärker 14 und 15 über die galvanische Trennung 9 an den Mikroprozessor 6 meldet.

Parallel zu der Reihenschaltung aus Leistungsschalter 5, Induktivitäten L1, L2 und Shuntwiderständen R1 und R2 liegt eine Freilaufdiode D1, der ein Shuntwiderstand R3 zugeordnet ist, sowie ein Meßverstärker 10, der über die galvanische Trennung 9 ein Diodenüberwachungssignal an den Mikroprozessor 6 sendet.

Ein Pol des Leistungsschalters 5, der mit Batteriespannung (normalerweise dem Pluspol) verbunden ist, ist über einen weiteren Meßverstärker 17 über die galvanische Trennung 9 mit dem Mikroprozessor 6 verbunden. Über diesen Weg kann die Batteriespannung gemessen und überwacht werden.

Der Leistungsschalter 5 wird durch zwei Signale geschaltet, nämlich ein Freigabesignal und ein Schaltsignal (EIN/AUS) zum Ein- und Ausschalten des Leistungsschalters 5. Beide Signale können über externe Anschlüsse 11 und 12 dem Steuergerät 1 zugeführt werden und zwar zweckmäßiger Weise ebenfalls über die galvanische Trennung 9, wobei es selbstverständlich auch möglich ist, diese Signale dem Mikroprozessor 6 zuzuführen, der sie an seinen Ausgängen über die galvanische Trennung weiterleitet. Diese beiden Signale werden in einem "UND"-Gatter 18 miteinander verknüpft und steuern den Leistungsschalter 5 und damit das Ein- und Ausschalten der Induktivitäten L1 und L2 für die Bremsmagnete.
Auf der gegenüber dem Leistungsteil (insbesondere Leistungsschalter 5) galvanisch getrennten Seite befindet sich neben dem Mikroprozessor 6 noch ein Netzteil 19, das eine geregelte Spannungsversorgung für die Meßverstärker und die Ansteuerung des Leistungsschalters 5 bereitstellt. Auch die Spannungsversorgung der genannten Bauteile ist gegenüber dem Netzteil 19 galvanisch getrennt.

Der Strom durch die Induktivitäten L1 und L2 wird fortlaufend durch die Shuntwiderstände R1 und R2 gemessen und an den Mikroprozessor 6 gemeldet.

Die Überwachung der Freilaufdiode D1 erfolgt durch den Meßverstärker 10, der als Komparator ausgebildet ist und den Strom durch die Freilaufdiode D1 als Spannungsabfall an den Shuntwiderstand R3 mißt. Der Meßverstärker 10 sendet somit ein digitales Signal an den Mikroprozessor 6.

Die Temperatur des Leistungsschalters wird von dem Temperatursensor 13 überwacht und als analoges Signal von den Meßverstärkern 14 und 15 an den Mikroprozessor 6 gemeldet. Ebenso wird die Batteriespannung durch den Meßverstärker 17 überwacht und als analoges Signal an den Mikroprozessor 6 gemeldet. Alle Signale von und zum Leistungsteil und alle Versorgungsspannungen des Leistungsteils sind galvanisch vom Steuerteil (Mikroprozessor 6 und Netzteil 19) getrennt.

Die Temperatur der Bremsmagnete wird indirekt über den Strom durch die Induktivitäten L1 und L2 im stationären Zustand überwacht. Der ohmsche Widerstand der Induktivitäten L1 und L2 ändert sich signifikant mit der Temperatur, so daß bei ansonsten bekannten Parametern im stationären Zustand bei konstantem Strom größer 0 und zeitlicher Ableitung di/dt = 0 der Strom einen Rückschluß auf die Temperatur der Bremsmagneten zuläßt, was bei der Auswertung berücksichtigt wird.

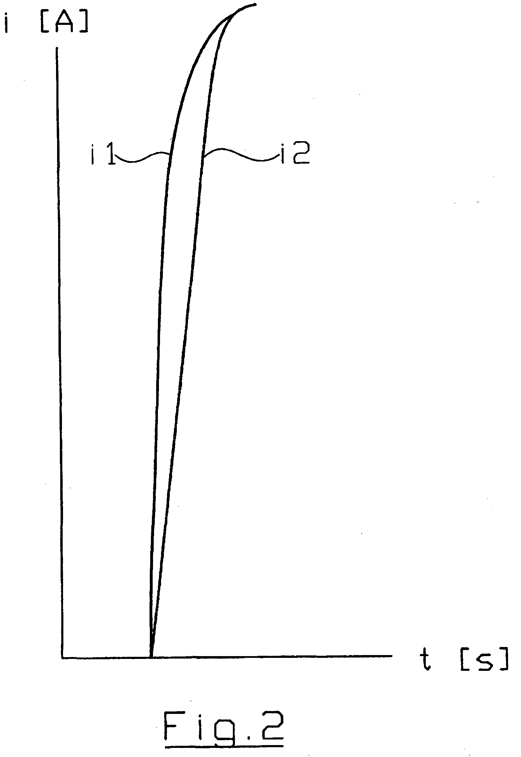

Figur 2 zeigt ein Diagramm des Stromes (i) in Abhängigkeit von der Zeit (t), der durch die Induktivitäten (Bremsmagnet) L1 und L2 fließt. Der Stromverlauf i1 zeigt den Fall, daß der Bremsmagnet Kontakt zur Schiene hat, während der Stromverlauf i2 den Fall zeigt, daß der Bremsmagnet keinen Kontakt zur Schiene hat. Die beiden Stromverläufe i1 und i2 unterscheiden sich signifikant bezüglich der Anstiegsgeschwindigkeit des Stromes. Nach der Grundidee der Erfindung werden die Stromanstiegsgeschwindigkeiten ausgewertet Damit läßt sich allein durch Messung des Stromes über die Shuntwiderstände R1 und R2 (Figur 1) erkennen, ob der Bremsmagnet Kontakt zur Schiene hat.

Nach einer Variante der Erfindung ist der zeitliche Verlauf des Stromanstieges mit Kontakt des Bremsmagneten zur Schiene gemäß der Kurve i2 der Figur 2 im Mikroprozessor 6 als "Referenzstrom" gespeichert. Diese Kurve I2 des Referenzstromes kann nach einer ersten Variante der Erfindung individuell für die einzelne Schienenbremse bestimmt werden. Nach einer anderen Variante der Erfindung ist es auch möglich, die Kurve I2 für den Referenzstrom rein rechnerisch bzw. theoretisch festzulegen und eine Anpassung an den jeweiligen Typ der Schienenbremse bzw. an die individuelle Schienenbremse durch geeignete Normierungsfaktoren oder durch Auswahl von nachfolgend erläuterten Schwellwerten vorzunehmen.

Der Mikroprozessor 6 bildet fortlaufend die Differenz zwischen dem gemessenen Stromverlauf, der über die Shuntwiderstände R1 und R2 und die Meßverstärker 7 und 8 gemeldet wird und dem Stromverlauf des Referenzstromwertes und integriert die Differenz über die Zeit auf. Überschreitet dieses Integral der Differenz der Stromverläufe einen vorbestimmten Schweliwert, so meldet der Mikroprozessor 6, daß kein Kontakt zwischen Bremsmagnet und Schiene besteht. Ist umgekehrt dieses Integral unterhalb des Schwellwertes, so meldet der Mikroprozessor, daß ein Kontakt besteht und somit die Schienenbremse verfügbar und wirksam ist. Umgekehrt ist es aber auch möglich die Kurve I2 für den Referenzstrom auf eine nicht aufgesetzte Schienenbremse zu beziehen und gegenüber dem zuvor geschilderten Fall dann mit inverser Logik zu arbeiten.

Vorzugsweise wird das genannte Integral der Differenz nur in einem vorgegebenen Zeitintervall ausgewertet, das kürzer ist, als die Zeitdauer innerhalb der der Strom durch die Induktivitäten L1 und L2 seinen vollen Sättigungswert bzw. Nennwert erreicht hat.

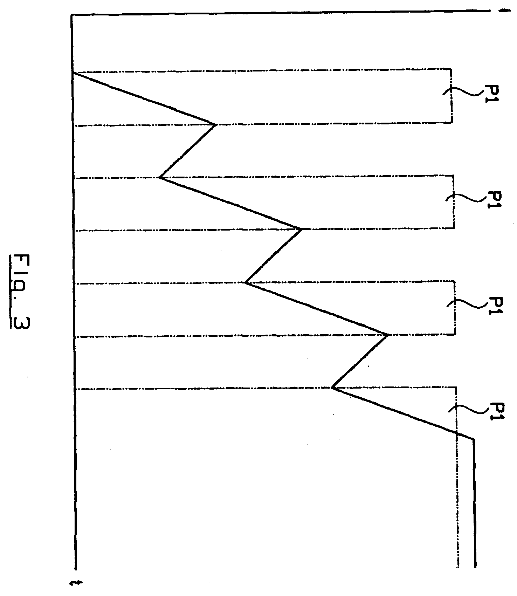

Gemäß einer Weiterbildung der Erfindung, die rein schematisch in Figur 3 dargestellt ist, wird der Einschaltvorgang auf mehrere Einschaltimpulse P1 bis P4 aufgeteilt, d.h. der Leistungsschalter 5 der Figur 1 wird getaktet. Es ergeben sich somit aufeinanderfolgende Stromanstiege und Stromabfälle, bis in der Phase P4 der volle Nennstrom erreicht ist. Die zuvor beschriebene Auswertung der Stromanstiegsgeschwindigkeiten wird in jeder der Phasen P1 bis P4 neu durchgeführt, wobei diese Auswertung auch in einem Zeitintervall durchgeführt werden kann, das kürzer ist, als die Phasen P1, P2 oder P3. Vorzugsweise wird die Auswertung zu Beginn der jeweiligen Phase vorgenommen.

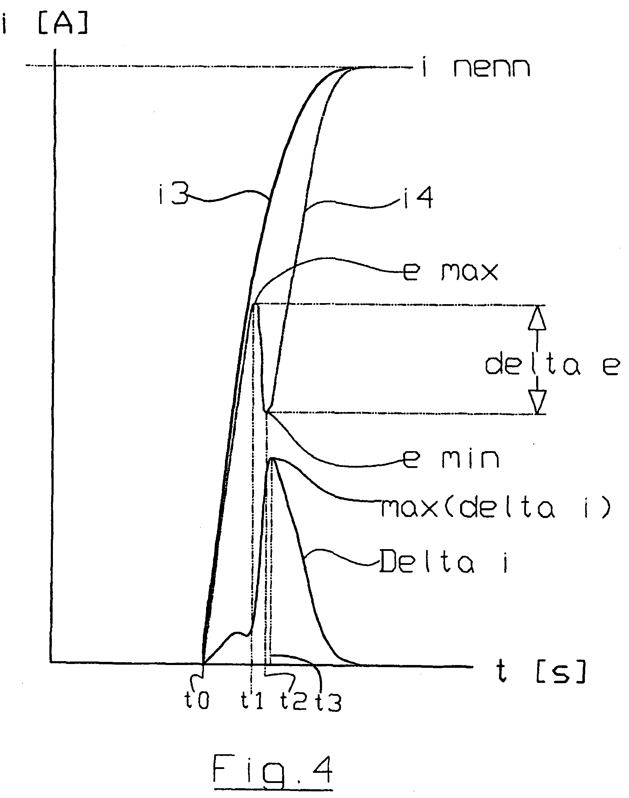

Figur 4 zeigt Stromverläufe des Stromes durch die Induktivitäten L1 und L2 in Abhängigkeit von der Zeit. Die Kurve i3 zeigt einen Stromverlauf des Einschaltstromes ohne einen Zustandswechsel der magnetischen Kopplung zwischen Bremsmagnet und Schiene. Je nachdem, ob die magnetische Kopplung vorhanden ist oder nicht, ist die Steilheit gemäß den Kurven i1 und i2 der Figur 2 unterschiedlich. Findet während des Einschaltvorganges ein Zustandswechsel der magnetischen Kopplung zwischen Bremsmagnet und Schiene statt, so zeigt der Stromverlauf gemäß Kurve i4 eine signifikante Änderung durch Ausbildung lokaler Extremwerte e min und e max. In dem Moment (t1), zu dem sich die magnetische Kopplung einstellt, ändert sich im Ersatzschaltbild der Figur 1 der Wert der Induktivitäten L1 und L2, so daß der Strom ein lokales Maximum (e max) erreicht, dann kurzzeitig kleiner wird und nach Erreichen eines lokalen Minimums e min zum Zeitpunkt t2 erneut und dann etwas langsamer ansteigt. Durch Auswerten der Signifikanten Änderungen, insbesondere der lokalen Extremwerte e max und e min des Stromes i4 läßt sich somit ein Zustandswechsel der magnetischen Kopplung feststellen. Ist beispielsweise, wie in Figur 4 dargestellt, der Erregerstrom i4 für die Induktivitäten L1 und L2 schon während der mechanischen Absenkphase des Bremsmagneten in Richtung zur Schiene eingeschaltet, so bildet sich bei Verringerung des Luftspaltes zwischen Bremsmagnet und Schiene ab einem bestimmten Abstand die magnetische Kopplung aus und der Stromverlauf gemäß Kurve i4 der Figur 4 wird gemessen.

Nach einer Weiterbildung der Erfindung erfolgt die Auswertung gemäß den obigen Verfahrensschritten jeweils von Neuem nach Auftreten eines lokalen Minimums e min. Ab diesem Zeitpunkt wird dann also wieder die Stromanstiegsgeschwindigkeit erneut ausgewertet indem die Differenz der gespeicherten Sollkurve (Referenzstrom) zur gemessenen Istkurve über die Zeit integriert wird, wobei auch hier die Auswertung in einem vorgegebenen Zeitfenster durchgeführt werden kann. Es werden somit nur die positiven Stromanstiegsgeschwindigkeiten verglichen.

Der oben genannten Schwellwert des Integrales kann in Abhängigkeit vom Typ der Schienenbremse eingestellt werden.

Da in der Praxis die gemessenen Stromverläufe von Störsignalen überlagert sind, wird nach einer Weiterbildung der Erfindung das Signal des gemessenen Stromverlaufes gefiltert und zwar vorzugsweise mit einem Tiefpassfilter, dessen Grenzfrequenz vom Typ der Schienenbremse abhängig ist. Die Grenzfrequenz liegt in der Größenordnung von kleiner 50Hz.

Eine Erhöhung der Sicherheit des Erkennens von lokalen Extremwerten erhält man dadurch, daß die Differenz des Integrals der Stromwerte der lokalen Extremwerte mindestens 30% der Differenz des Integrals des gespeicherten Referenzstromes entspricht, wobei die beiden Integrale jeweils in demselben Zeitraum ermittelt werden.

Zum Erkennen der magnetischen Kopplung zwischen Bremsmagnet und Schiene kann auch der zeitliche Abstand (t2-t1) der lokalen Extremwerte erfaßt und mit denen eines Normsignals verglichen werden. Es wird also die Zeitdifferenz t1-t2 ausgewertet innerhalb der der Stromverlauf vom lokalen Maximum e max zum lokalen Minimum e min verläuft. Dabei werden vorzugsweise nur solche Stromverläufe ausgewertet, bei denen die Differenz Delta e zwischen dem lokalen Maximum e max und dem lokalen Minimum e min einen vorgegebenen Grenzwert überschreitet.

Auch hierbei kann wiederum das Integral der Differenz des gemessenen Stromverlaufes zu einem gespeicherten Referenzstromverlauf ermittelt werden.

Auch kann das Integral der Differenz des Iststromverlaufes zu einem solchen Referenzstromverlauf gebildet werden, der ab dem Zeitpunkt des ersten Extremwertes (e max in Figur 4) durch ein extrapoliertes Kurvenstück bis zum Erreichen des Nennstromes inenn gebildet wird. Auch hier kann dann wieder ein Schwellwert bestimmt werden, der vom Schienenbremstyp abhängig ist. Erst wenn dieser Schwellwert überschritten wird, wird eine magnetische Kopplung zwischen Bremsmagnet und Schiene angenommen. Auch diese Auswertung mit dem extrapolierten Kurvenstück kann auf ein Zeitfenster begrenzt werden, wobei auch dann wiederum ein vom Schienenbremstyp abhängiger Schwellwert überschritten werden muß.

Ein weiteres Kriterium kann sein, daß der Strom im lokalen Minimum e min innerhalb eines Zeitfensters t2-x bis t2+x einen Mittelwert des Stromes in diesem Zeitfenster unterschreitet Die Zeitdauer x hängt vom Typ der Schienenbremse ab und liegt in der Größenordnung von kleiner 1 Sekunde.

Ein weiteres Kriterium kann wie folgt bestimmt werden. Es wird laufend die Differenz Delta i zwischen dem gemessenen Strom i4 und dem Referenzstrom i3 gebildet, was in der Kurve Delta i der Figur 4 dargestellt ist. Aus dem Verlauf von Delta i wird der Zeitpunkt t3 des Maximums von Delta i ermittelt und überprüft, ob dieses innerhalb eines Zeitfensters t2-x bis t2+x liegt. Ist dies der Fall, so ist dies ebenfalls ein Kriterium dafür, daß die magnetische Kopplung zwischen Bremsmagnet und Schiene stattgefunden hat Aus dem Meßdiagramm der Figur 4 ist zu erkennen, daß der Maximalwert der Differenz max(Delta i) auch außerhalb des Zeitbereiches t1 bis t2 liegen kann, weshalb es sinnvoll ist, das genannte Zeitfenster beidseitig zu t2 zu legen. Anstelle der Differenz kann auch das Integral der Differenz und dessen Maximalwert ermittelt und ausgewertet werden.

Schließlich können Fehler aufgrund von Schwankungen der Batteriespannung, Änderung der Temperatur der Magnetspulen der Schienenbremse und/oder der Temperatur des Leistungsschalters 5 dadurch eliminiert werden, daß die gespeicherte Sollkurve des Referenzstromes in Bezug auf die Batteriespannung, die Temperatur der Magnetspulen der Schienenbremse und/oder die Temperatur des Leistungsschalters 5 normiert wird. Die Batteriespannung und die Temperatur des Leistungsschalters 5 werden gemäß Figur 1 durch den Meßverstärker 17 für die Batteriespannung und die Meßverstärker 14 und 15 für die Temperatur des Leistungsschalters erfaßt. Die Temperatur der Magnetspulen der Schienenbremsen wird, wie oben erläutert, durch Messung des stationären Stromes durch die Induktivitäten L1 und L2 indirekt ermittelt. Ein stationärer Strom wird dadurch definiert, daß der Strom größer 0 ist und die zeitliche Ableitung des Stromes di/dt gleich 0 ist.

## Patentansprüche

1. Verfahren zur Wirküberwachung von Schienenbremsen, bei dem eine Wicklung eines Bremsmagneten von einem elektrischen Strom durchflossen wird, **gekennzeichnet durch** folgende Schritte:
- Messen des elektrischen Stromes (i2, i4) und
- Vergleichen des zeitlichen Verlaufes des gemessenen Stromes mit einem gespeicherten zeitlichen Verlauf eines Referenzstromes (i1, i3).

2. Verfahren nach Anspruch 1, **dadurch gekennzeichnet, daß** das Vergleichen durch Differenzbildung zwischen dem gemessenen Strom (i2, i4) und dem Referenzstrom (i1, i3) erfolgt.

3. Verfahren nach Anspruch 2, **dadurch gekennzeichnet, daß** die Differenz zwischen dem gemessenen Strom (i2, i4) und dem Referenzstrom (i1, i3) zeitlich aufintegriert wird.

4. Verfahren nach einem der Ansprüche 1 bis 3, **dadurch gekennzeichnet, daß** das Vergleichen nur innerhalb eines vorgegebenen Zeitintervalles während eines Einschaltvorganges der Schienenbremse durchgeführt wird, wobei das vorgegebene Zeitintervall kürzer ist, als eine Zeitdauer zwischen dem Einschalten des Stromes und dem Erreichen eines Nennstromes.

5. Verfahren nach einem der Ansprüche 1 bis 4, **dadurch gekennzeichnet, daß** der der Wicklung des Bremsmagneten zugeführte Strom impulsweise (P1-P4) zugeführt wird und daß das Vergleichen bei jedem Impuls (P1-P4) neu durchgeführt wird.

6. Verfahren nach einem der Ansprüche 1 bis 5, **dadurch gekennzeichnet, daß** lokale Minima (e min) und/oder lokale Maxima (e max) des gemessenen Stromes (i4) ermittelt werden und daß nur der zeitliche Verlauf des gemessenen Stromes (i4) mit einem Anstieg des Stromes (i4) dem Vergleich mit dem Referenzstrom (i3) unterworfen wird.

7. Verfahren nach Anspruch 6, **dadurch gekennzeichnet, daß** nur der auf ein lokales Minimum (e min) folgende Verlauf des gemessenen Stromes (i4) dem Vergleich mit dem Referenzstrom (i3) unterworfen wird.

8. Verfahren nach Anspruch 6 oder 7, **dadurch gekennzeichnet, daß** bei einem Erfassen lokaler Minima (e min) und lokaler Maxima (e max) des gemessenen Stromes (i4) das zeitliche Integral der Differenz der Änderungsgeschwindigkeit des gemessenen Stromes (i4) und des Referenzstromes (i3) während einer vorgegebenen Zeitdauer ermittelt und mit einem vorgegebenen Schwellwert verglichen wird.

9. Verfahren nach einem der Ansprüche 1 bis 8, **dadurch gekennzeichnet, daß** der gespeicherte zeitliche Verlauf des Referenzstromes (i1, i3) in Abhängigkeit vom Typ der Schienenbremse bestimmt wird.

10. Verfahren nach einem der Ansprüche 1 bis 8, **dadurch gekennzeichnet, daß** der gespeicherte zeitliche Verlauf des Referenzstromes (i1, i3) unabhängig vom Typ der Schienenbremse bestimmt wird und der Vergleich des zeitlichen Verlaufes des gemessenen Stromes mit dem zeitlichen Verlauf des Referenzstromes in Abhängigkeit von mindestens einem Schwellwert durchgeführt ist, der in Abhängigkeit vom Typ der Schienenbremse festgelegt ist.

11. Verfahren nach einem der Ansprüche 6 bis 10, **dadurch gekennzeichnet, daß** der zeitliche Abstand (t1-t2) des Auftretens eines lokalen Maximums (e max) und eines lokalen Minimums (e min) mit entsprechenden Werten eines Referenzsignals verglichen werden.

12. Verfahren nach einem der Ansprüche 1 bis 11, **dadurch gekennzeichnet, daß** der gemessene Strom (i2, i4) vor dem Vergleich mit einem Tiefpassfilter gefiltert wird.

13. Verfahren nach Anspruch 12, **dadurch gekennzeichnet, daß** die Grenzfrequenz des Tiefpassfilters kleiner 50Hz ist.

14. Verfahren nach einem der Ansprüche 6 bis 13, **dadurch gekennzeichnet, daß** die Differenz der Stromwerte zwischen lokalem Maximum (e max) und lokalem Minimum (e min) ermittelt und mit einem vorgegebenen Schwellwert verglichen wird.

15. Verfahren nach Anspruch 1, **dadurch gekennzeichnet, daß** der Schwellwert mindestens 30% der Differenz des Referenzstromes entspricht.

16. Verfahren nach einem der Ansprüche 6 bis 15, **dadurch gekennzeichnet, daß** das Integral der Differenz zwischen gemessenem Strom (i2, i4) und einem ab dem Zeitpunkt des ersten Extremwertes (e max) extrapolierten Kurvenstücks bis zum Erreichen eines Nennstromes (e nenn) mit einem Schwellwert verglichen wird.

17. Verfahren nach Anspruch 16, **dadurch gekennzeichnet, daß** die Differenz des Integrales innerhalb eines vorgegebenen Zeitfensters gebildet wird.

18. Verfahren nach Anspruch 17, **dadurch gekennzeichnet, daß** das Zeitfenster einen Bereich vor (t2-x) und nach (t2+x) dem lokalen Minimum (e min) überdeckt.

19. Verfahren nach Anspruch 18, **dadurch gekennzeichnet, daß** der zum Zeitpunkt (t2) des lokalen Minimums (e min) gemessene Strom mit einem Mittelwert des in dem Zeitfenster gemessenen Stromes verglichen wird.

20. Verfahren nach einem der Ansprüche 6 bis 19, **dadurch gekennzeichnet, daß** überprüft wird, ob der Zeitpunkt des Auftretens eines Maximums (max(Delta i)) der Differenz (Delta i) zwischen Iststrom (i4) und Referenzstrom (i3) innerhalb eines vorgegebenen Zeitfensters (t2-x bis t2+x) liegt, mit x kleiner gleich 1 Sekunde.

21. Verfahren nach einem der Ansprüche 1 bis 20, **dadurch gekennzeichnet, daß** der gemessene Wert des Stromes (i4) und/oder der Verlauf des Referenzstromes (i3) in Abhängigkeit von der Größe des gemessenen elektrischen Stromes (i4) in dessen stationären Zustand normiert wird.

## Claims

1. Method of monitoring the function of rail brakes, wherein an electric current flows through a coil of a braking magnet, **characterised by** the following steps:
- measuring the electric current (i2, i4), and
- comparing the development of the measured current over time against a stored development of a reference current over time (i1, i3).

2. Method according to Claim 1, **characterised in that** said comparison is performed by forming the difference between the measured current (i2, i4) and said reference current (i1, i3).

3. Method according to Claim 2, **characterised in that** the difference between the measured current (i2, i4) and said reference current (i1, i3) is temporally integrated.

4. Method according to any of the Claims 1 to 3, **characterised in that** the comparison is performed only within a predetermined time interval during a switch-on operation of the rail brake, with said predetermined time interval being shorter than a period between switch-on of the current and the reaching of a rated current.

5. Method according to any of the Claims 1 to 4, **characterised in that** the current supplied to said coil of said braking magnet is supplied in pulses (P1 - P4) and that the comparison is performed anew for each pulse (P1 - P4).

6. Method according to any of the Claims 1 to 5, **characterised in that** local minima (e min) and/or local maxima (e max) of said measured current (i4) are determined and that only the development of the measured current (i4) over time with a rise of the current (i4) is subjected to the comparison against said reference current (i3).

7. Method according to Claim 6, **characterised in that** only the development of the measured current (i4), which follows a local minimum (e min), is subjected to the comparison against said reference current (i3).

8. Method according to Claim 6 or 7, **characterised in that** when local minima (e min) and local maxima (e max) of said measured current (i4) are detected, the temporal integral of the difference of the rate of change of said measured current (i4) and said reference current (i3) is determined during a predetermined interval and compared against a predetermined threshold value.

9. Method according to any of the Claims 1 to 8, **characterised in that** the stored development of said reference current (i1, i3) over time is determined as a function of the type of the rail brake.

10. Method according to any of the Claims 1 to 8, **characterised in that** the stored development of said reference current (i1, i3) over time is determined independently of the type of said rail brake and that the comparison of the development of the measured current over time is performed against the development of said reference current over time as a function of at least one threshold value that is determined as a function of the type of said rail brake.

11. Method according to any of the Claims 6 to 10, **characterised in that** the differences in time (t1 - t2) of occurrence of a local maximum (e max) and a local minimum (e min) are compared against corresponding values of a reference signal.

12. Method according to any of the Claims 1 to 11, **characterised in that** the measured current (i2, i4) is filtered by means of a low-pass filter prior to said comparison.

13. Method according to Claim 12, **characterised in that** the cut-off frequency of said low-pass filter is less than 50 Hz.

14. Method according to any of the Claims 6 to 13, **characterised in that** the difference of the current values between a local maximum (e max) and a local minimum (e min) is determined and compared against a predetermined threshold value.

15. Method according to Claim 1, **characterised in that** said threshold value corresponds to at least 30 % of the difference of said reference current.

16. Method according to any of the Claims 6 to 15, **characterised in that** the integral of the difference between the measured current (i2, i4) and a curve segment extrapolated from the point of time of said first extreme value (e max) onwards up to reaching a rated current (e nenn) is compared against a threshold value.

17. Method according to Claim 16, **characterised in that** the difference of said integral is calculated within a predetermined time slot.

18. Method according to Claim 17, **characterised in that** said time slot covers a range from a point before (t2-x) to a point after (t2+x) said local minimum (e min).

19. Method according to Claim 18, **characterised in that** the current measured at the point of time (t2) of said local minimum (e min) is compared against an average value of the current measured within said time slot.

20. Method according to any of the Claims 6 to 19, **characterised in that** a check is made to determine whether the point of time of occurrence of a maximum (max(Delta i)) of the difference (Delta i) between the actual current (i4) and said reference current (i3) is within a predetermined time slot (t2-x to t2+x), with x being smaller than or equal to 1 second.

21. Method according to any of the Claims 1 to 20, **characterised in that** the measured value of the current (i4) and/or the development of said reference current (i3) is normalised as a function of the magnitude of the measured electric current (i4) in the latter's stationary condition.

## Revendications

1. Procédé à surveiller le fonctionnement des freins sur rail, dans lequel un courant électrique circule par une bobine d'un aimant de freinage, **caractérisé par** les étapes suivantes :
- mesure du courant électrique (i2, i4), et
- comparaison de l'allure du courant mesuré dans le temps avec une allure mise en mémoire d'un courant de référence dans le temps (i1, i3).

2. Procédé selon la revendication 1, **caractérisé en ce que** ladite comparaison se fait par calcul de la différence entre le courant mesuré (i2, i4) et ledit courant de référence (i1, i3).

3. Procédé selon la revendication 2, **caractérisé en ce que** la différence entre le courant mesuré (i2, i4) et ledit courant de référence (i1, i3) est intégrée temporellement.

4. Procédé selon une quelconque des revendications 1 à 3, **caractérisé en ce que** la comparaison ne se fait qu'au-dedans d'un intervalle de temps prédéterminé au course d'une opération d'enclenchement dudit frein sur rail, audit intervalle de temps prédéterminé étant plus court qu'une période entre l'enclenchement du courant et l'atteinte d'un courant de consigne.

5. Procédé selon une quelconque des revendications 1 à 4, **caractérisé en ce que** le courant alimenté à ladite bobine dudit aimant de freinage set alimenté en impulsions (P1 - P4), et **en ce que** la comparaison se fait de nouveau pour chaque impulsion (P1 - P4).

6. Procédé selon une quelconque des revendications 1 à 5, **caractérisé en ce que** des minima locaux (e min) et/ou des maxima locaux (e max) dudit courant mesuré (i4) sont détectés, en **en ce que** l'allure du courant mesuré (i4) dans le temps seulement, à une augmentation du courant (i4), est soumise à la comparaison avec ledit courant de référence (i3).

7. Procédé selon la revendication 6, **caractérisé en ce que** l'allure du courant mesuré (i4) seulement, qui se joigne à un minimum local (e min), set soumise à la comparaison avec ledit courant de référence (i3).

8. Procédé selon la revendication 6 ou 7, **caractérisé en ce que** quand des minima locaux (e min) et des maxima locaux (e max) dudit courant mesuré (i4) sont détectés, l'intégral temporel de la différence de la vitesse de variation dudit courant mesuré (i4) et dudit courant de référence (i3) est déterminé au cours d'un intervalle prédéterminé et comparée avec une valeur limite prédéterminée.

9. Procédé selon une quelconque des revendications 1 à 8, **caractérisé en ce que** l'allure dudit courant de référence (i1, i3) dans le temps, mise en mémoire, est déterminée en fonction du modèle du frein sur rail.

10. Procédé selon une quelconque des revendications 1 à 8, **caractérisé en ce que** l'allure dudit courant de référence (i1, i3) dans le temps, mise en mémoire, est déterminée indépendamment du modèle du frein sur rail, et **en ce que** la comparaison de l'allure du courant mesuré dans le temps se fait avec l'allure dudit courant de référence dans le temps en fonction d'au moins une valeur de seuil, qui est déterminée en fonction du modèle du frein sur rail.

11. Procédé selon une quelconque des revendications 6 à 10, **caractérisé en ce que** les différences temporelles (t1 - t2) entre les occurrences d'un maximum local (e max) et un minimum local (e min) sont comparées avec des valeurs correspondantes d'un signal de référence.

12. Procédé selon une quelconque des revendications 1 à 11, **caractérisé en ce que** le courant mesuré (i2, i4) est filtré moyennant un filtre passe-bas avant ladite comparaison.

13. Procédé selon la revendication 12, **caractérisé en ce que** la fréquence de sortie d'arrêt dudit filtre passe-bas est plus petite que 50 Hz.

14. Procédé selon une quelconque des revendications 6 à 13, **caractérisé en ce que** la différence des valeurs de courant entre un maximum local (e max) et un minimum local (e min) est déterminée et comparée avec une valeur limite prédéterminée.

15. Procédé selon la revendication 1, **caractérisé en ce que** ladite valeur de seuil correspond à au moins 30 % de la différence dudit courant de référence.

16. Procédé selon une quelconque des revendications 6 à 15, **caractérisé en ce que** l'intégral de la différence entre le courant mesuré (i2, i4) et un segment de courbe extrapolé à partir du point de temps de ladite première valeur extrême (e max) vers un point où un courant de consigne (e nenn) est atteint, est comparé avec une valeur limite.

17. Procédé selon la revendication 16, **caractérisé en ce que** la différence dudit intégral est calculé au-dedans d'une fenêtre de temps prédéterminée.

18. Procédé selon la revendication 17, **caractérisé en ce que** ladite fenêtre de temps recouvre une gamme à partir d'un point avant (t2-x) jusqu'à un point après (t2+x) ledit minimum local (e min).

19. Procédé selon la revendication 18, **caractérisé en ce que** le courant mesuré au point de temps (t2) dudit minimum local (e min) est comparé avec une valeur moyenne du courant mesuré au-dedans de ladite fenêtre de temps.

20. Procédé selon une quelconque des revendications 6 à 19, **caractérisé en ce qu'**il y a un contrôle afin de déterminer, si le point de temps de l'occurrence d'un maximum (max(Delta i)) de la différence (Delta i) entre le courant réel (i4) et ledit courant de référence (i3) se trouve au-dedans d'une fenêtre de temps prédéterminée (t2-x à t2+x), à x étant inférieur ou égal à une seconde.

21. Procédé selon une quelconque des revendications 1 à 20, **caractérisé en ce que** la valeur mesurée du courant (i4) et/ou l'allure dudit courant de référence (i3) est normalisée en fonction de la grandeur du courant électrique mesuré (i4) en l'état stationnaire du dernier.
